# EUROPÄISCHE PATENTANMELDUNG

(11) **EP 4 588 327 A1**
(43) Veröffentlichungstag der Anmeldung: **23.07.2025**
(21) Anmeldenummer: 24217420.9
(22) Anmeldetag: 04.12.2024
(51) Int. Cl.: A01B 79/00, A01M 21/00, A01D 34/00

(54) **TRAKTOR MIT MÄHWERKSSEITIGER SCHADPFLANZENERFASSUNG**

(30) Priorität: 18.01.2024 DE 102024101448
(71) Anmelder: CLAAS Saulgau GmbH, 88340 Bad Saulgau (DE)
(72) Erfinder: Rupp, Magnus, 73494 Rosenberg (DE); Ott, Florian, 78567 Fridingen a.D. (DE); Bistritz, Philipp, 78224 Singen (DE); Pflanze, Sascha, 88348 Bad Saulgau (DE); Ried, Andreas, 87651 Bidingen (DE)
(74) Vertreter: Budach, Steffen

(57) **Zusammenfassung**

Die vorliegende Erfindung betrifft einen Traktor (1) mit einem gekoppelten Arbeitsaggregat (2) für den Einsatz auf einem landwirtschaftlichen Feld (3) und einer an diesem Arbeitsaggregat (2) angeordneten Sensorvorrichtung (8, 9, 10) zur Erfassung des landwirtschaftlichen Feldes (3) im Vorfeld (11, 12, 13) des Arbeitsaggregates (2). Dieser Traktor (1) weist eine Einstellvorrichtung (14) auf, die dazu vorgesehen und eingerichtet ist, mittels Satellitensignalen von Satelliten (18) eine Position (19) des Traktors (1) bezüglich des landwirtschaftlichen Feldes (3) zu ermitteln.

Die vorliegende Erfindung beruht auf dem allgemeinen Gedanken, dass während des Mähens des Ernteguts gleichzeitig eine sensorische Erfassung der Schadpflanzen (4) erfolgt, sodass zusätzliche Arbeitsschritte bezüglich der Schadpflanzenerfassung entfallen und unnötige Überfahrten des landwirtschaftlichen Feldes reduziert werden.

## Beschreibung

Die vorliegende Erfindung betrifft einen Traktor mit einem gekoppelten Arbeitsaggregat für den Einsatz auf einem landwirtschaftlichen Feld und einer an diesem Arbeitsaggregat angeordneten Sensorvorrichtung zur Erfassung des landwirtschaftlichen Feldes im Vorfeld des Arbeitsaggregates. Dieser Traktor weist eine Einstellvorrichtung auf, die dazu vorgesehen und eingerichtet ist, mittels Satellitensignalen von Satelliten eine Position des Traktors bezüglich des landwirtschaftlichen Feldes zu ermitteln.

Die DE 10 2022 105 448 A1 offenbart ein computerimplementiertes Verfahren zur Bestimmung von Pflanzenkrankheiten in einem bestehenden Erntegutbestand auf einem Feld, wobei der Erntegutbestand von einer landwirtschaftlichen Arbeitsmaschine mit einem daran angeordneten Arbeitsaggregat bearbeitet wird, wobei mittels eines der Arbeitsmaschine zugeordneten Kamerasystems zumindest im Vorfeld des Arbeitsaggregates Bilddaten des abzuerntenden Erntegutbestands erzeugt und an ein der Arbeitsmaschine zugeordnetes Bildauswertungssystem zur Auswertung übertragen werden. Gemäß der DE 10 2022 105 448 A1 kann das Arbeitsaggregat für einen Traktor als Bodenbearbeitungsgerät, Feldspritze oder eine sonstige zur Bearbeitung des Feldbodens oder des Erntegutbestands dienende Vorrichtung ausgebildet sein.

Zusätzlich zu Pflanzenkrankheiten des Ernteguts können auf landwirtschaftlichen Feldern auch Schadpflanzen entstanden sein, die die Qualität des Ernteguts stark beeinträchtigen können. Diese Schadpflanzen können beispielsweise ein Unkraut wie Ampfer, Herbstzeitlose, Jakobskreuzkraut, Bärenklau, Binsen, Brennnessel, Distel, Hahnen-fuß, Löwenzahn, Schachtelhalm, Schafgarbe, Vogelmiere und/oder Wiesenkerbel sein.

Bezüglich der Schadpflanzen-Detektion sind Landwirte auf Beobachtungsangaben von Fahrern der Landmaschinen angewiesen und/oder müssen das landwirtschaftliche Feld mittels einem Drohnenflug bezüglich Schadpflanzen prüfen. Diese bekannten Vorgehensweisen zur Schadpflanzen-Detektion sind entkoppelt vom Mähverfahren, sodass stets ein zusätzlicher aufwendiger Arbeitsschritt erforderlich ist, um die Qualität des geernteten Ernteguts zu sichern. Dies ist für den Landwirt zeitlich als auch kostentechnisch nachteilig.

Der vorliegenden Erfindung liegt daher die Aufgabe zugrunde, einen verbesserten Traktor anzugeben, mit dem eine schnellere, sicherere und kostengünstigere Schadpflanzen-Detektion ermöglicht wird.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass während des Mähens des Ernteguts gleichzeitig eine sensorische Erfassung der Schadpflanzen erfolgt, sodass zusätzliche Arbeitsschritte bezüglich der Schadpflanzenerfassung entfallen und unnötige Überfahrten des landwirtschaftlichen Feldes reduziert werden.

Das Arbeitsaggregat des erfindungsgemäßen Traktors ist als Mähwerkvorrichtung zum Mähen von Erntegut des landwirtschaftlichen Feldes ausgebildet, wobei die Sensorvorrichtung zur Erfassung der Schadpflanzen des landwirtschaftlichen Feldes vorgesehen und eingerichtet ist. Die Einstellvorrichtung ist dazu vorgesehen und eingerichtet, insbesondere ausgebildet und/oder programmiert, in Abhängigkeit der Position des Traktors Positionsdaten bezüglich der mittels der Sensorvorrichtung erfassten Schadpflanzen zu ermitteln. Diese Positionsdaten bilden die Grundlage für die Ermittlung der Anzahl der vorhandenen Schadpflanzen im landwirtschaftlichen Feld und/oder für die Erstellung einer Applikationskarte basierend auf den georeferenzierten Fundorten der vorhandenen Schadpflanzen aus.

Die Einstellvorrichtung kann als Steuer- und/oder Regelvorrichtung ausgebildet sein, die eine Einstellung durch eine Steuerung und/oder Regelung des Traktors, insbesondere des Arbeitsaggregats, bewirkt. Die Einstellvorrichtung kann eine Recheneinheit, insbesondere eine computerbasierte Recheneinheit, und einen Datenspeicher, insbesondere einen computerlesbaren Datenspeicher, aufweisen. Die Einstellvorrichtung kann innerhalb des Traktors ausgebildet und/oder kommunizierend mit der Sensorvorrichtung der Mähwerkvorrichtung verbunden sein.

Bei einer vorteilhaften Weiterbildung der erfindungsgemäßen Lösung ist vorgesehen, dass die Sensorvorrichtung dazu eingerichtet ist, für die Erfassung der Schadpflanzen eine digitale Abbildung des Vorfeldes der Mähwerkvorrichtung zu erzeugen, wobei die Einstellvorrichtung dazu vorgesehen und eingerichtet ist, in der digitalen Abbildung des Vorfeldes vorhandene Schadpflanzen zu erkennen und deren Positionsdaten zu ermitteln. Die Einstellvorrichtung kann dazu vorgesehen und eingerichtet sein, in Abhängigkeit der satellitenbasierten Position des Traktors, Informationen bezüglich der Ausgestaltung des Traktors und der Mähwerkvorrichtung, insbesondere der Anordnungsposition und der Art der Sensorvorrichtung, und der im Vorfeld erkannten Schadpflanze den georeferenzierten Fundort bezüglich dieser Schadpflanze zu ermitteln.

Bei einer vorteilhaften Weiterbildung der erfindungsgemäßen Lösung ist vorgesehen, dass die Schadpflanze ein Unkraut ausbildet, welches nicht dem angebauten Erntegut des landwirtschaftlichen Feldes entspricht. Mit anderen Worten ausgedrückt, sind Schadpflanzen keine Pflanzenkrankheiten des Ernteguts, sondern separat ausgebildete Unkrautpflanzen. Diese Schadpflanzen können beispielsweise ein Unkraut wie Ampfer, Bärenklau, Herbstzeitlose, Jakobskreuzkraut, Binsen, Brennnessel, Distel, Hahnen-fuß, Löwenzahn, Schachtelhalm, Schafgarbe, Vogelmiere und/oder Wiesenkerbel sein.

Bei einer vorteilhaften Weiterbildung der erfindungsgemäßen Lösung ist vorgesehen, dass die Sensorvorrichtung eine berührungslose Sensorvorrichtung ist. Diese berührungslose Sensorvorrichtung kann als Kameravorrichtung ausgebildet sein.

Bei einer vorteilhaften Weiterbildung der erfindungsgemäßen Lösung ist vorgesehen, dass die Ermittlung der vorhandenen Schadpflanzen, insbesondere der Schadpflanzenposition, in der digitalen Abbildung des Vorfeldes mittels künstlicher Intelligenz, insbesondere mittels einem künstlichen neuronalen Netz, erfolgt. Die erforderlichen Trainingsdaten für die künstlicher Intelligenz können digitale Abbildungen der Schadpflanzen ausbilden.

Bei einer vorteilhaften Weiterbildung der erfindungsgemäßen Lösung ist vorgesehen, dass die Einstellvorrichtung dazu eingerichtet ist, die ermittelten Positionsdaten der erfassten Schadpflanzen bei einer Erstellung einer digitalen Abbildung des landwirtschaftlichen Feldes für eine nachfolgende Ernte des gemähten Ernteguts zu verwenden. Die während der Überfahrt des Mähens gesammelten Daten bezüglich der Schadpflanzen können einerseits dem Landwirt eine direkte Rückmeldung zur Anzahl (Masse) der Schadpflanzen in seinem Bestand geben. Durch die GPS-Positionen der Schadpflanzen können beim Ernten Bereiche mit hohen Schadpflanzen umfahren werden, sodass beispielsweise die Qualität von Futtererntegut gesteigert werden kann.

Bei einer vorteilhaften Weiterbildung der erfindungsgemäßen Lösung ist vorgesehen, dass die Einstellvorrichtung dazu eingerichtet ist, die ermittelten Positionsdaten der erfassten Schadpflanzen bei einer Erstellung einer digitalen Abbildung des landwirtschaftlichen Feldes für eine nachfolgende Unkrautvernichtung zu verwenden. Die technische Lösung hierbei basiert auf der Sensorvorrichtung, insbesondere der kamerabasierten Sensorvorrichtung, und der satellitenbasierten GPS-Position des Traktors. Wird im Kamerabild eine Schadpflanze erkannt, so wird dies mittels der künstlichen Intelligenz kategorisiert und gezählt. Anhand der Schadpflanzenposition in der digitalen Abbildung sowie der satellitenbasierten GPS-Position des Traktors, wird die GPS-Position der Schadpflanze errechnet und ein Point-of-Interest (POI) und/oder Standort bezüglich dieser Schadpflanze festgelegt. Aus dieser Information kann eine digitale Abbildung in Form einer Applikationskarte erstellt werden, welche zur späteren punktuellen Behandlung der Schadpflanzen einsetzbar ist. Diese Applikationskarte kann während einer nachfolgenden Pflanzenschutzbehandlung einstellungstechnisch verwendet werden. Dies umfasst auch den Einsatz von Drohnen mit passenden Spritzdüsen.

Bei einer vorteilhaften Weiterbildung der erfindungsgemäßen Lösung ist vorgesehen, dass die Einstellvorrichtung dazu eingerichtet ist, die digitale Abbildung des landwirtschaftlichen Feldes zu erstellen und an ein außerhalb des Traktors ausgebildetes Assistenzsystem für eine nachfolgende Ernte und/oder Unkrautvernichtung zu übermitteln, und/oder dass die Einstellvorrichtung dazu eingerichtet ist, die ermittelten Positionsdaten der erfassten Schadpflanzen an das außerhalb des Traktors ausgebildete Assistenzsystem zu übermitteln, wobei das Assistenzsystem dazu vorgesehen und eingerichtet ist, die digitale Abbildung des landwirtschaftlichen Feldes für die nachfolgende Ernte und/oder Unkrautvernichtung zu erstellen.

Das Assistenzsystem kann als Steuer- und/oder Regelvorrichtung ausgebildet sein. Das Assistenzsystem kann eine Recheneinheit, insbesondere eine computerbasierte Recheneinheit, und einen Datenspeicher, insbesondere einen computerlesbaren Datenspeicher, aufweisen. Das Assistenzsystem kann kommunizierend mit der Einstellvorrichtung des Traktors verbunden sein.

Bei einer vorteilhaften Weiterbildung der erfindungsgemäßen Lösung ist vorgesehen, dass die in der digitalen Abbildung des landwirtschaftlichen Feldes hinterlegten Positionsdaten der erfassten Schadpflanzen einstellungstechnische Daten für die Einstellung weiterer Arbeitsmaschinen während der Ernte und/oder Unkrautvernichtung ausbilden.

Bei einer vorteilhaften Weiterbildung der erfindungsgemäßen Lösung ist vorgesehen, dass das Assistenzsystem dazu eingerichtet ist, in Abhängigkeit der in der digitalen Abbildung des landwirtschaftlichen Feldes hinterlegten Positionsdaten der erfassten Schadpflanzen einen Routenplan für eine fliegende Drohnenvorrichtung zur Unkrautvernichtung, insbesondere mittels des Einsatzes von Unkrautvernichtungsmitteln, zu erzeugen.

Alternativ oder zusätzlich ist das Assistenzsystem dazu vorgesehen und eingerichtet, in Abhängigkeit der in der digitalen Abbildung des landwirtschaftlichen Feldes hinterlegten Positionsdaten der erfassten Schadpflanzen einen derart angepassten Routenplan für landwirtschaftliche Arbeitsmaschinen zur Ernte des gemähten Ernteguts derart zu erzeugen, dass der Unkrautanteil des aufgenommenen Ernteguts reduziert wird.

Bei einer vorteilhaften Weiterbildung der erfindungsgemäßen Lösung ist vorgesehen, dass der Traktor eine frontseitige Mähwerkvorrichtung zum Mähen von Erntegut des landwirtschaftlichen Feldes aufweist, wobei an dieser frontseitigen Mähwerkvorrichtung eine erste Sensorvorrichtung zur vorausschauenden Erfassung eines ersten Vorfeldes angeordnet ist.

Alternativ oder zusätzlich weist der Traktor eine erste heckseitige Mähwerkvorrichtung zum Mähen von Erntegut des landwirtschaftlichen Feldes auf, wobei an dieser ersten heckseitigen Mähwerkvorrichtung eine zweite Sensorvorrichtung zur vorausschauenden Erfassung eines zweiten Vorfeldes angeordnet ist.

Alternativ oder zusätzlich weist der Traktor eine zweite heckseitige Mähwerkvorrichtung zum Mähen von Erntegut des landwirtschaftlichen Feldes auf, wobei an dieser zweiten heckseitigen Mähwerkvorrichtung eine dritte Sensorvorrichtung zur vorausschauenden Erfassung eines dritten Vorfeldes angeordnet ist.

Bei einer vorteilhaften Weiterbildung der erfindungsgemäßen Lösung ist vorgesehen, dass die frontseitige Mähwerkvorrichtung wenigstens eine als Trommelmähwerk und/oder als Scheibenmähwerk und/oder als Balkenmähwerk ausgebildete Mäheinheit aufweist.

Bei einer vorteilhaften Weiterbildung der erfindungsgemäßen Lösung ist vorgesehen, dass die erste heckseitige Mähwerkvorrichtung wenigstens eine als Trommelmähwerk und/oder als Scheibenmähwerk und/oder als Balkenmähwerk ausgebildete Mäheinheit aufweist.

Alternativ oder zusätzlich weist die zweite heckseitige Mähwerkvorrichtung wenigstens eine als Trommelmähwerk und/oder als Scheibenmähwerk und/oder als Balkenmähwerk ausgebildete Mäheinheit auf.

Bei einer vorteilhaften Weiterbildung der erfindungsgemäßen Lösung ist vorgesehen, dass die erste Sensorvorrichtung mittig an der frontseitigen Mähwerkvorrichtung angeordnet ist, und/oder dass die zweite Sensorvorrichtung derart an der ersten heckseitigen Mähwerkvorrichtung angeordnet ist, dass die zweite Sensorvorrichtung eine Beabstandung zum Traktor aufweist, und/oder dass die dritte Sensorvorrichtung derart an der zweiten heckseitigen Mähwerkvorrichtung angeordnet ist, dass die dritte Sensorvorrichtung eine Beabstandung zum Traktor aufweist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine perspektivische Darstellung des erfindungsgemäßen Traktors, und
- Fig. 2: eine weitere detaillierte Darstellung dieses Traktors.

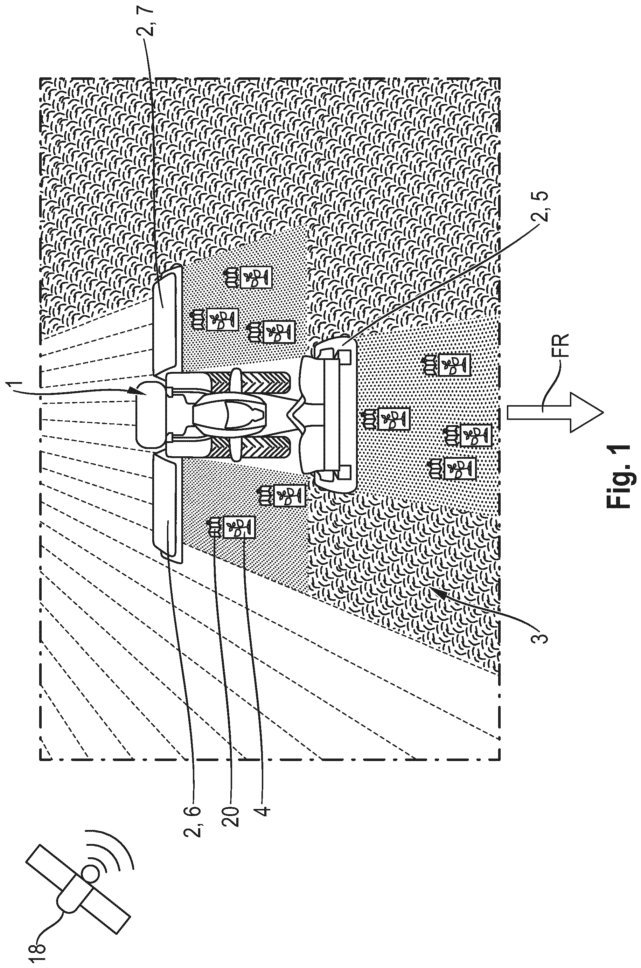

Die Fig. 1 zeigt den erfindungsgemäßen Traktor 1 mit mehreren gekoppelten Arbeitsaggregaten 2 für den Einsatz auf einem landwirtschaftlichen Feld 3 während einer Fahrt entlang der Fahrtrichtung FR. Die Arbeitsaggregate 2 des Traktors 1 sind als Mähwerkvorrichtungen zum Mähen von Erntegut des landwirtschaftlichen Feldes 3 ausgebildet.

Der Traktor 1 weist bezüglich der Fahrtrichtung FR eine frontseitige Mähwerkvorrichtung 5 und eine erste heckseitige Mähwerkvorrichtung 6 als auch eine zweite heckseitige Mähwerkvorrichtung 7 auf. Diese Mähwerkvorrichtungen 5, 6, 7 können jeweils eine als Trommelmähwerk und/oder als Scheibenmähwerk und/oder als Balkenmähwerk ausgebildete Mäheinheit aufweisen.

Auf dem landwirtschaftlichen Feld 3 sind mehrere Schadpflanzen 4 entstanden, die die Qualität des Erntegutes stark beeinträchtigen können. Eine solche Schadpflanze 4 bildet ein Unkraut aus, welches nicht dem angebautem Erntegut des landwirtschaftlichen Feldes 3 entspricht. Diese Schadpflanzen 4 können beispielsweise ein Unkraut wie Ampfer, Bärenklau, Binsen, Brennnessel, Distel, Hahnen-fuß, Löwenzahn, Schachtelhalm, Schafgarbe, Vogelmiere und/oder Wiesenkerbel sein.

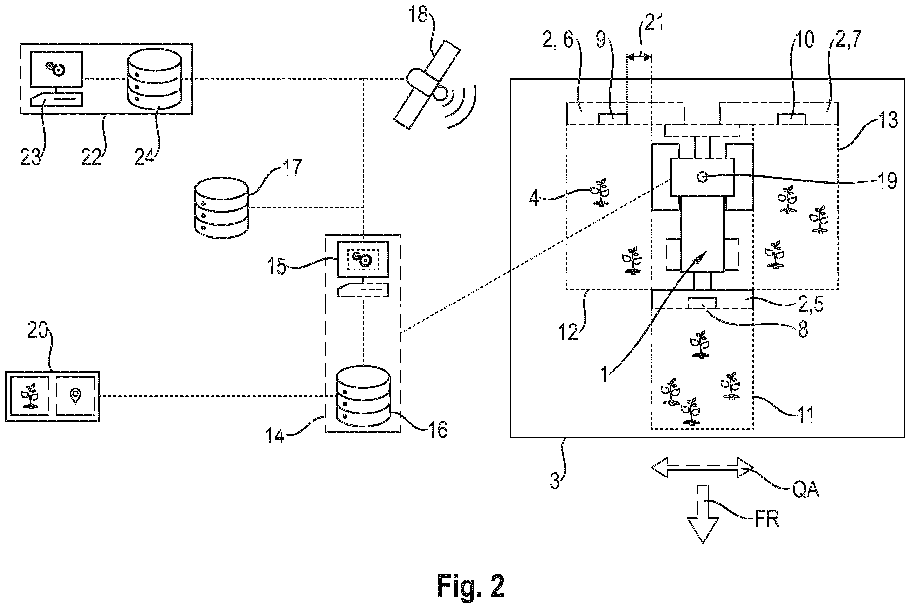

In der Fig. 2 ist dargestellt, dass an diesen Mähwerkvorrichtungen 5, 6, 7 jeweils eine Sensorvorrichtung 8, 9, 10 zur Erfassung des landwirtschaftlichen Feldes 3 im Vorfeld 11, 12, 13 der jeweiligen Mähwerkvorrichtung 5, 6, 7 ausgebildet ist. Diese Sensorvorrichtungen 8, 9, 10 sind jeweils zur Erfassung der Schadpflanzen 4 vorgesehen und eingerichtet.

Der erfindungsgemäße Traktor 1 weist eine Einstellvorrichtung 14 auf, die dazu vorgesehen und eingerichtet ist, mittels Satellitensignalen von Satelliten 18 eine satellitenbasierte Position 19 des Traktors 1 bezüglich des landwirtschaftlichen Feldes 3 zu ermitteln und in Abhängigkeit dieser Position 19 des Traktors 1 entsprechende Positionsdaten 20 bezüglich der mittels der Sensorvorrichtungen 8, 9, 10 erfassten Schadpflanzen 4 zu ermitteln.

Diese Positionsdaten 20 bilden die Grundlage für die Ermittlung der Anzahl der im landwirtschaftlichen Feld 3 vorhandenen Schadpflanzen 4 und/oder für die Erstellung einer Applikationskarte basierend auf den georeferenzierten Fundorten 20 der Schadpflanzen 4 aus.

Die Einstellvorrichtung 14 kann als Steuer- und/oder Regelvorrichtung ausgebildet sein, die eine Einstellung durch eine Steuerung und/oder Regelung des Traktors 1, insbesondere der Mähwerkvorrichtungen 5, 6, 7, bewirkt. Die Einstellvorrichtung 14 kann eine Recheneinheit 15 und einen internen Datenspeicher 16 und/oder einen externen Datenspeicher 17 aufweisen. Die Einstellvorrichtung 14 ist innerhalb des Traktors 1 ausgebildet und kommunizierend mit den Sensorvorrichtungen 8, 9, 10 der Mähwerkvorrichtungen 5, 6, 7 verbunden.

Die Sensorvorrichtungen 8, 9, 10 sind dazu vorgesehen, für die Erfassung der Schadpflanzen 4 eine digitale Abbildung des jeweiligen Vorfeldes 11, 12, 13 der Mähwerkvorrichtung 5, 6, 7 zu erzeugen, wobei die Einstellvorrichtung 14 dazu eingerichtet ist, in diesen digitalen Abbildungen der Vorfelder 11, 12, 13 vorhandene Schadpflanzen 4 zu erkennen und deren Positionsdaten 20 zu ermitteln. Somit erfolgt während des Mähens des Ernteguts gleichzeitig eine sensorische Erfassung der Schadpflanzen 4, sodass zusätzliche Arbeitsschritte bezüglich der Schadpflanzenerfassung entfallen und unnötige Überfahrten des landwirtschaftlichen Feldes 3 reduziert werden.

Die frontseitige Mähwerkvorrichtung 5 weist die erste Sensorvorrichtung 8 des Traktors 1 zur vorausschauenden Erfassung des ersten Vorfeldes 11 auf. Die erste heckseitige Mähwerkvorrichtung 6 weist die zweite Sensorvorrichtung 9 zur vorausschauenden Erfassung des zweiten Vorfeldes 12 auf. Die zweite heckseitige Mähwerkvorrichtung 7 weist die dritte Sensorvorrichtung 10 zur vorausschauenden Erfassung des dritten Vorfeldes 13 auf. Diese Sensorvorrichtungen 8, 9, 10 können als berührungslose Sensorvorrichtungen, insbesondere als Kameravorrichtungen, ausgebildet sein.

Die erste Sensorvorrichtung 8 ist bezüglich einer Querachse QA, die senkrecht zur Fahrtrichtung und/oder senkrecht zur Erdanziehungskraftrichtung ausgerichtet ist, mittig an der frontseitigen Mähwerkvorrichtung 5 angeordnet. Die zweite Sensorvorrichtung 9 ist derart an der ersten heckseitigen Mähwerkvorrichtung 6 angeordnet, dass die zweite Sensorvorrichtung 9 bezüglich der Querachse QR eine Beabstandung 21 zum Traktor 1 aufweist. Die
dritte Sensorvorrichtung 10 ist in analogerweise derart an der zweiten heckseitigen Mähwerkvorrichtung 7 angeordnet, dass die dritte Sensorvorrichtung 10 ebenfalls eine Beabstandung zum Traktor 1 aufweist. Diese Beabstandungen der Sensorvorrichtungen 9 und 10 bezüglich des Traktors 1, insbesondere bezüglich der Reifen des Traktors 1, hat den Vorteil, dass nachteilige Perspektivenverzerrungen nicht vorhanden sind und daher die Auswertung der sensorisch erfassten Informationen einfacher und sicherer erfolgt.

Die Ermittlung der vorhandenen Schadpflanzen 4 in den digitalen Abbildungen der Vorfelder 11, 12, 13 kann mittels künstlicher Intelligenz, insbesondere mittels einem künstlichen neuronalen Netzwerk, erfolgen.

Die Einstellvorrichtung 14 kann dazu vorgesehen sein, die ermittelten Positionsdaten 20 der erfassten Schadpflanzen 4 bei einer Erstellung einer digitalen Abbildung des landwirtschaftlichen Feldes 3 für eine nachfolgende Ernte des gemähten Ernteguts zu verwenden. Zusätzlich kann die Einstellvorrichtung 14 dazu eingerichtet sein, die ermittelten Positionsdaten 20 der erfassten Schadpflanzen 4 bei einer Erstellung einer digitalen Abbildung des landwirtschaftlichen Feldes 3 für eine nachfolgende Unkrautvernichtung zu verwenden. Die in der digitalen Abbildung des landwirtschaftlichen Feldes 3 hinterlegten Positionsdaten 20 der erfassten Schadpflanzen 4 bilden einstellungstechnische Daten für die Einstellung weiterer Arbeitsmaschinen während der Ernte und/oder Unkrautvernichtung aus.

Die Einstellvorrichtung 14 ist dazu vorgesehen und eingerichtet, die digitale Abbildung des landwirtschaftlichen Feldes 3 zu erstellen und an ein außerhalb des Traktors 1 ausgebildetes Assistenzsystem 22 für eine nachfolgende Ernte und/oder Unkrautvernichtung zu übermitteln. Alternativ oder zusätzlich ist die Einstellvorrichtung 14 dazu vorgesehen und eingerichtet, die ermittelten Positionsdaten 20 der erfassten Schadpflanzen 4 an das außerhalb des Traktors 1 ausgebildete Assistenzsystem 22 zu übermitteln, wobei das Assistenzsystem 22 dazu vorgesehen und eingerichtet ist, die digitale Abbildung des landwirtschaftlichen Feldes 3 für die nachfolgende Ernte und/oder Unkrautvernichtung zu erstellen.

Das Assistenzsystem 22 kann als Steuer- und/oder Regelvorrichtung ausgebildet sein. Das Assistenzsystem 22 kann eine Recheneinheit 23, insbesondere eine computerbasierte Recheneinheit, und einen Datenspeicher 24, insbesondere einen computerlesbaren Datenspeicher, aufweisen. Das Assistenzsystem 22 kann kommunizierend mit der Einstellvorrichtung 14 des Traktors 1 und/oder mit dem externen Datenspeicher 17 verbunden sein.

Das Assistenzsystem 22 ist dazu vorgesehen und eingerichtet, in Abhängigkeit der in der digitalen Abbildung des landwirtschaftlichen Feldes 3 hinterlegten Positionsdaten 20 bezüglich der erfassten Schadpflanzen 4 einen Routenplan für eine nicht dargestellte fliegende Drohnenvorrichtung zur Unkrautvernichtung zu erzeugen.

Ferner kann das Assistenzsystem 22 dazu vorgesehen und eingerichtet sein, in Abhängigkeit der in der digitalen Abbildung des landwirtschaftlichen Feldes 3 hinterlegten Positionsdaten 20 bezüglich der erfassten Schadpflanzen 4 einen derart angepassten Routenplan für nicht dargestellte landwirtschaftliche Arbeitsmaschinen zur Ernte des gemähten Ernteguts derart zu erzeugen, dass der Unkrautanteil des aufgenommenen Ernte reduziert wird.

### Bezugszeichenliste

- 1: Traktor
- 2: Arbeitsaggregat
- 3: landwirtschaftliches Feld
- 4: Schadpflanze bzw. Unkraut
- 5: Fronseitige Mähwerkvorrichtung
- 6: erste heckseitige Mähwerkvorrichtung
- 7: zweite heckseitige Mähwerkvorrichtung
- 8: erste Sensorvorrichtung, insbesondere eine berührungslose Sensorvorrichtung
- 9: zweite Sensorvorrichtung, insbesondere eine berührungslose Sensorvorrichtung
- 10: dritte Sensorvorrichtung, insbesondere eine berührungslose Sensorvorrichtung
- 11: Vorfeld und/oder Erfassungsbereich der ersten Sensorvorrichtung
- 12: Vorfeld und/oder Erfassungsbereich der zweiten Sensorvorrichtung
- 13: Vorfeld und/oder Erfassungsbereich der dritten Sensorvorrichtung
- 14: Einstellvorrichtung
- 15: Recheneinheit
- 16: Datenspeicher
- 17: Externer Datenspeicher
- 18: Satellit
- 19: satellitenbasierte Position des Traktors
- 20: Positionsdaten bezüglich der Schadpflanze bzw. des Unkrauts
- 21: Beabstandung
- 22: Assistenzsystem zur Ernteplannung und/oder Unkrautvernichtungsplannung
- 23: Recheneinheit
- 24: Datenspeicher
- FR: Fahrtrichtung
- QA: Querachse

## Patentansprüche

1. Traktor (1)
- mit einem gekoppelten Arbeitsaggregat (2) für den Einsatz auf einem landwirtschaftlichen Feld (3) und einer an diesem Arbeitsaggregat (2) angeordneten Sensorvorrichtung (8, 9, 10) zur Erfassung des landwirtschaftlichen Feldes (3) im Vorfeld (11, 12, 13) des Arbeitsaggregates (2),
- mit einer Einstellvorrichtung (14), die dazu vorgesehen und eingerichtet ist, mittels Satellitensignalen von Satelliten (18) eine Position (19) des Traktors (1) bezüglich des landwirtschaftlichen Feldes (3) zu ermitteln,
**dadurch gekennzeichnet,**
- **dass** das Arbeitsaggregat (2) als Mähwerkvorrichtung (5, 6, 7) zum Mähen von Erntegut des landwirtschaftlichen Feldes (3) ausgebildet ist,
- wobei die Sensorvorrichtung (8, 9, 10) zur Erfassung von Schadpflanzen (4) vorgesehen und eingerichtet ist,
- wobei die Einstellvorrichtung (14) dazu vorgesehen und eingerichtet ist, in Abhängigkeit der Position (19) des Traktors (1) Positionsdaten (20) bezüglich der mittels der Sensorvorrichtung (8, 9, 10) erfassten Schadpflanzen (4) zu ermitteln.

2. Traktor (1) nach Anspruch 1,
**dadurch gekennzeichnet,**
- **dass** die Sensorvorrichtung (8, 9, 10) dazu vorgesehen und eingerichtet ist, für die Erfassung der Schadpflanzen (4) eine digitale Abbildung des Vorfeldes (11, 12, 13) der Mähwerkvorrichtung (5, 6, 7) zu erzeugen,
- wobei die Einstellvorrichtung (14) dazu vorgesehen und eingerichtet ist, in der digitalen Abbildung des Vorfeldes (11, 12, 13) vorhandene Schadpflanzen (4) zu erkennen und deren Positionsdaten (20) zu ermitteln.

3. Traktor (1) nach einem der vorhergehenden Ansprüche,
**dadurch gekennzeichnet,**
**dass** die Schadpflanze (4) ein Unkraut ausbildet, welches nicht dem angebauten Erntegut des landwirtschaftlichen Feldes (3) entspricht.

4. Traktor (1) nach einem der vorhergehenden Ansprüche,
**dadurch gekennzeichnet,**
**dass** die Sensorvorrichtung (8, 9, 10) eine berührungslose Sensorvorrichtung ist.

5. Traktor (1) nach einem der vorhergehenden Ansprüche,
**dadurch gekennzeichnet,**
**dass** die Sensorvorrichtung (8, 9, 10) eine Kameravorrichtung ist.

6. Traktor (1) nach einem der Ansprüche 2 bis 5,
**dadurch gekennzeichnet,**
**dass** die Ermittlung der vorhandenen Schadpflanzen (4) in der digitalen Abbildung des Vorfeldes (11, 12, 13) mittels künstlicher Intelligenz, insbesondere mittels einem künstlichen neuronalen Netz, erfolgt.

7. Traktor (1) nach einem der vorhergehenden Ansprüche,
**dadurch gekennzeichnet,**
**dass** die Einstellvorrichtung (14) dazu vorgesehen und eingerichtet ist, die ermittelten Positionsdaten (20) der erfassten Schadpflanzen (4) bei einer Erstellung einer digitalen Abbildung des landwirtschaftlichen Feldes (3) für eine nachfolgende Ernte des gemähten Ernteguts zu verwenden.

8. Traktor (1) nach einem der vorhergehenden Ansprüche,
**dadurch gekennzeichnet,**
**dass** die Einstellvorrichtung (14) dazu vorgesehen und eingerichtet ist, die ermittelten Positionsdaten (20) der erfassten Schadpflanzen (4) bei einer Erstellung einer digitalen Abbildung des landwirtschaftlichen Feldes (3) für eine nachfolgende Unkrautvernichtung zu verwenden.

9. Traktor (1) nach einem der Ansprüche 7 oder 8,
**dadurch gekennzeichnet,**
- **dass** die Einstellvorrichtung (14) dazu vorgesehen und eingerichtet ist, die digitale Abbildung des landwirtschaftlichen Feldes (3) zu erstellen und an ein außerhalb des Traktors (1) ausgebildetes Assistenzsystem (22) für eine nachfolgende Ernte und/oder Unkrautvernichtung zu übermitteln, und/oder
- **dass** die Einstellvorrichtung (14) dazu vorgesehen und eingerichtet ist, die ermittelten Positionsdaten (20) der erfassten Schadpflanzen (4) an das außerhalb des Traktors (1) ausgebildete Assistenzsystem (22) zu übermitteln, wobei das Assistenzsystem (22) dazu vorgesehen und eingerichtet ist, die digitale Abbildung des landwirtschaftlichen Feldes (3) für die nachfolgende Ernte und/oder Unkrautvernichtung zu erstellen.

10. Traktor (1) nach einem der Ansprüche 7 bis 9,
**dadurch gekennzeichnet, dass** die in der digitalen Abbildung des landwirtschaftlichen Feldes (3) hinterlegten Positionsdaten (20) der erfassten Schadpflanzen (4) einstellungstechnische Daten für die Einstellung weiterer Arbeitsmaschinen während der Ernte und/oder Unkrautvernichtung ausbilden.

11. Traktor (1) nach Anspruch 9 oder 10,
**dadurch gekennzeichnet,**
- **dass** das Assistenzsystem (22) dazu vorgesehen und eingerichtet ist, in Abhängigkeit der in der digitalen Abbildung des landwirtschaftlichen Feldes (3) hinterlegten Positionsdaten (20) bezüglich der erfassten Schadpflanzen (4) einen Routenplan für eine fliegende Drohnenvorrichtung zur Unkrautvernichtung zu erzeugen, und/oder
- **dass** das Assistenzsystem (22) dazu vorgesehen und eingerichtet ist, in Abhängigkeit der in der digitalen Abbildung des landwirtschaftlichen Feldes (3) hinterlegten Positionsdaten (20) bezüglich der erfassten Schadpflanzen (4) einen derart angepassten Routenplan für landwirtschaftliche Arbeitsmaschinen zur Ernte des gemähte Ernteguts zu erzeugen, dass der Unkrautanteil des aufgenommen Ernte reduziert wird.

12. Traktor (1) nach einem der vorhergehenden Ansprüche,
**dadurch gekennzeichnet,**
- **dass** der Traktor (1) eine frontseitige Mähwerkvorrichtung (5) zum Mähen von Erntegut des landwirtschaftlichen Feldes (3) aufweist, wobei an dieser frontseitigen Mähwerkvorrichtung (5) eine erste Sensorvorrichtung (8) zur vorausschauenden Erfassung des landwirtschaftlichen Feldes (3) des ersten Vorfeldes (11) angeordnet ist, und/oder
- **dass** der Traktor (1) eine erste heckseitige Mähwerkvorrichtung (6) zum Mähen von Erntegut des landwirtschaftlichen Feldes (3) aufweist, wobei an dieser ersten heckseitigen Mähwerkvorrichtung (6) eine zweite Sensorvorrichtung (9) zur vorausschauenden Erfassung des landwirtschaftlichen Feldes (3) des zweiten Vorfeldes (12) angeordnet ist, und/oder
- **dass** der Traktor (1) eine zweite heckseitige Mähwerkvorrichtung (7) zum Mähen von Erntegut des landwirtschaftlichen Feldes (3) aufweist, wobei an dieser zweiten heckseitigen Mähwerkvorrichtung (7) eine dritte Sensorvorrichtung (10) zur vorausschauenden Erfassung des landwirtschaftlichen Feldes (3) des dritten Vorfeldes (13) angeordnet ist.

13. Traktor (1) nach Anspruch 12,
**dadurch gekennzeichnet,**
**dass** die frontseitige Mähwerkvorrichtung (5) wenigstens eine als Trommelmähwerk und/oder als Scheibenmähwerk und/oder als Balkenmähwerk ausgebildete Mäheinheit aufweist.

14. Traktor (1) nach Anspruch 12 oder 13,
**dadurch gekennzeichnet,**
- **dass** die erste heckseitige Mähwerkvorrichtung (6) wenigstens eine als Trommelmähwerk und/oder als Scheibenmähwerk und/oder als Balkenmähwerk ausgebildete Mäheinheit aufweist, und/oder
- **dass** die zweite heckseitige Mähwerkvorrichtung (7) wenigstens eine als Trommelmähwerk und/oder als Scheibenmähwerk und/oder als Balkenmähwerk ausgebildete Mäheinheit aufweist.

15. Traktor (1) nach einem der Ansprüche 12 bis 14,
**dadurch gekennzeichnet,**
- **dass** die erste Sensorvorrichtung (8) mittig an der frontseitigen Mähwerkvorrichtung (5) angeordnet ist, und/oder
- **dass** die zweite Sensorvorrichtung (9) derart an der ersten heckseitigen Mähwerkvorrichtung (6) angeordnet ist, dass die zweite Sensorvorrichtung (9) eine Beabstandung (21) zum Traktor (1) aufweist, und/oder
- **dass** die dritte Sensorvorrichtung (10) derart an der zweiten heckseitigen Mähwerkvorrichtung (7) angeordnet ist, dass die dritte Sensorvorrichtung (10) eine Beabstandung zum Traktor (1) aufweist.
